# EUROPÄISCHE PATENTSCHRIFT

(11) **EP 0 637 785 B1**
(45) Veröffentlichungstag und Bekanntmachung des Hinweises auf die Patenterteilung: **27.08.1997**
(21) Anmeldenummer: 93115071.8
(22) Anmeldetag: 17.09.1993
(51) Int. Cl.: G05B 19/042, H04L 12/40

(54) **Koppeladapter zum Anschliessen eines Schutzschalters an einem Bus**
Coupling adaptor for connecting a circuit breaker to a bus
Adaptateur-coupleur pour brancher un disjoncteur sur un bus

(30) Priorität: 05.08.1993 DE 9311707 U
(43) Veröffentlichungstag der Anmeldung: 08.02.1995
(73) Patentinhaber: SIEMENS AKTIENGESELLSCHAFT, 80333 München (DE)
(72) Erfinder: Wolf, Johann Dr. Dipl.-Ing., D-93080 Pentling (DE)

(56) Entgegenhaltungen:
- EP-A- 0 279 168
- EP-A- 0 434 986
- DE-U- 9 304 021
- FR-A- 2 624 627

## Beschreibung

Die Erfindung bezieht sich auf einen Koppeladapter zum Anschließen eines Schutzschalters, insbesondere eines Leitungsschutzschalters, an einem Information führenden Bus, im einzelnen nach Gattungsbegriff von Patentanspruch 1. Als Bus eignet sich insbesondere der Bus der European Installation Bus Association, EIBA. Ein Busankoppler steht einerseits mit einem Kontaktsystem zum elektrischen und gegebenenfalls mechanischen Anschließen am Bus in Verbindung, andererseits mit einer Steuerelektronik, an der ein Auslösesystem angeschlossen ist. Das Auslösesystem kann insbesondere ein Arbeitsstromauslöser sein. Das Auslösesystem arbeitet auf eine Auslöseachse für anbaubare Schutzschalter. Ein Koppeladapter nach einem nicht vorveröffentlichten Gebrauchsmuster (DE-U-94 06 897) weist unter anderen Merkmalen derartige Merkmale auf.

Der bekannte Koppeladapter ermöglicht die Einbindung eines Schutzschalters, insbesondere eines Leitungsschutzschalters, in ein Bussystem, wobei der Koppeladapter eine ankoppelbare Zusatzfunktion erfüllt, indem er sich zur Erfassung, beziehungsweise Meldung von Zuständen des Schutzschalters eignet. Er ermöglicht auch die Ausschaltung beziehungsweise Entklinkung eines Schutzschalters auch bei über Bus zugeleiteten Befehlen. Die eigentliche Schutzfunktion des Schutzschalters bleibt dabei unberührt, so daß der Schutzschalter in herkömmlicher Weise approbiert werden kann.

Der Erfindung liegt die Aufgabe zugrunde, einen Koppeladapter zu entwickeln, der geeignet ist, ein Schutzsystem mit zusätzlichen Schutzfunktionen auch in Nachrüstung zu unterlegen.

Die Lösung der geschilderten Aufgabe erfolgt erfindungsgemäß durch einen Koppeladapter nach Patentanspruch 1. Der Busankoppler ist in Verbindung mit der Steuerelektronik außer zur Erfassung von Befehlen auch zur Erfassung und programmierten Verarbeitung von Meßsignalen, beziehungsweise Zustandsinformationen ausgelegt.

Dadurch ist der Busankoppler in der Lage, Ausschaltbefehle unter Verarbeitung der Meßsignale selbst zu bilden und den Ausschaltbefehl über sein Auslösesystem, insbesondere einen Arbeitsstromauslöser, an einen angekoppelten Schutzschalter weiterzugeben, indem dieser über die Auslöseachse ausgelöst wird.

Das durch handelsübliche Schutzschalter erreichte Schutzprofil läßt sich mit zusätzlichen Schutzprofilen unterlegen. Die durch den Schutzschalter vorgegebene Sicherheit wird dann mit früher oder alternativ zum Zuge kommenden Schutzwirkungen ergänzt, so daß man von Zusatzfunktionen spricht.

Es kann vorteilhaft sein, die Steuerelektronik zusätzlich mit einem gesonderten Anschluß für externen Sensor zu versehen. Die Meßsignale beziehungsweise Zustandsinformationen können dann nicht nur über Bus sondern auch durch eine zusätzliche Leitung unmittelbar zugeführt werden.

Wenn man an der Steuerelektronik einen Sensor, beziehungsweise Meßglieder, innerhalb des Gehäuses des Koppeladapters anschließt, kann man entsprechend Messungen direkt durch den Koppeladapter vornehmen.

Die Steuerelektronik kann vorteilhafterweise Einrichtungen zum Laden eines geeigneten Programms zur Verarbeitung aufweisen, das insbesondere auch geeignet ist zur Abgabe von Ausschaltbefehlen über Bus. Der Koppeladapter läßt sich hierdurch den unterschiedlichsten Anfordungen anpassen. Verständlicherweise kann das Programm auch durch eine Platine hardwaremäßig eingebaut sein.

Es ist günstig, wenn der Koppeladapter über eine Einrichtung zum Laden eines Programms zur Verarbeitung - über Bus verfügt. Es erübrigt sich dann ein Programmiergerät dort anzubringen, vielmehr kann der Koppeladapter dann von entfernter Stelle aus über den Bus mit einem geeigneten Programm geladen werden.

Je nach Anwendungsfall kann es vorteilhaft sein, ein Programm im Koppeladapter fest zu speichern und Schnittstellen zur Eingabe von Parametern vorzusehen. Auch bei geringen Programmierkenntnissen, beziehungsweise bei geringen Kenntnissen des Programms, läßt sich dann ein Programm leicht an jeweilige Aufgaben anpassen.

Durch Koppeladapter der geschilderten Art kann man beispielsweise die Realisierung einer bestimmten Strom-Zeit-Auslösekennlinie erzielen, ohne handelsübliche Schutzschalter in ihren approbierten Eigenschaften zu beeinträchtigen. Durch den Koppeladapter erzielt man mit bewährten Schutzschaltern, die einen bestimmten Schutz sicherstellen, vielfältige Möglichkeiten, zusätzliche Schutzprofile zu verwirklichen. Man kann also das durch handelsübliche Schutzschalter erreichte Schutzprofil mit zusätzlichen Schutzprofilen unterlegen. Die durch den Schutzschalter vorgegebene Sicherheit wird dann durch früher oder alternativ zum Zuge kommende Schutzwirkungen ergänzt.

Die Erfindung soll nun anhand von in der Zeichnung grob schematisch wiedergegebenen Ausführungsbeispielen näher erläutert werden:
- In FIG 1: ist ein Koppeladapter im Profil eines Schutzschalters in Grundausführung veranschaulicht.
- In FIG 2: ist ein Koppeladapter mit einem zusätzlichen gesonderten Anschluß für einen externen Sensor dargestellt.
- In FIG 3: ist ein Koppeladapter mit einem an der Steuerelektronik angeschlossenen integrierten Sensor wiedergegeben.
- In FIG 4: ist eine Schaltungsanordnung mit einem Busankoppler, einem Schutzschalter, einem Sensor und einem zu schützenden Gerät dargestellt.
- In FIG 5: ist eine Tragschiene mit eingelegter Datenschiene und aufgesetztem Schutzschalter sowie einem Koppeladapter wiedergegeben.
- In FIG 6: sind verschiedene Anwendungsfälle und Ausführungsbeispiele veranschaulicht.

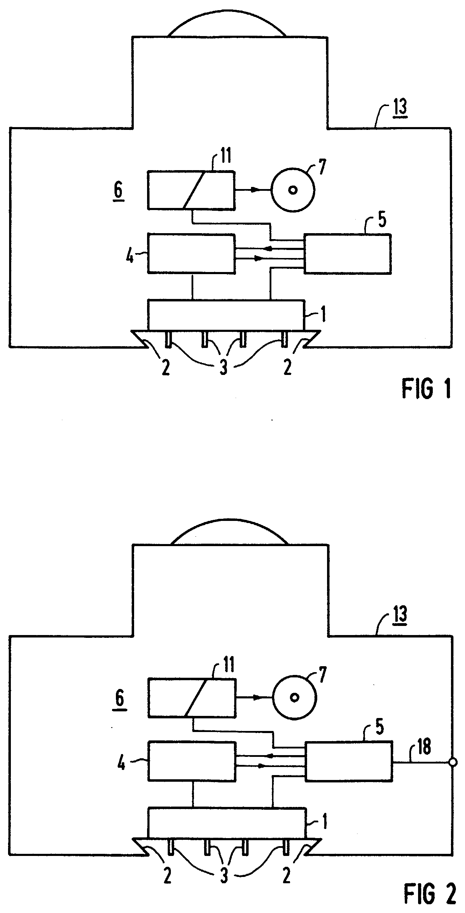

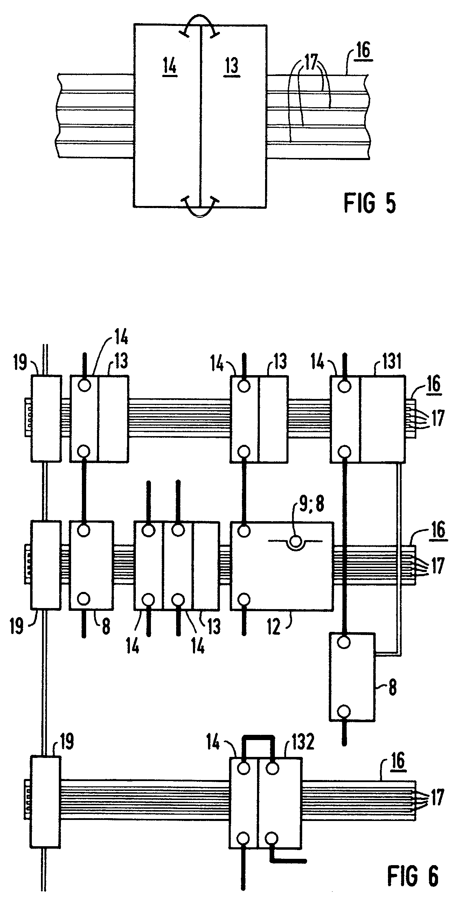

Im Ausführungsbeispiel nach FIG 1 sind die Funktionsteile des Koppeladapters in einem Gehäuse mit dem Profil eines Leitungsschutzschalters angeordnet. Ein Kontaktsystem 1 dient zum elektrischen Anschließen an Busleitern 17 in einer Tragschiene 16, man vergleiche FIG 5. Die Busleiter eines Information führenden Busses können am Boden einer Tragschiene 16 in Form einer Datenschiene eingelegt sein. Der Koppeladapter läßt sich mittels Ausnehmungen 2 und mechanischer Verriegelungen auf eine Tragschiene 16 aufsetzen und daran halten. Derartige Halterungen sind bei Schutzschaltern in der Ausführung als anreihbare Geräte üblich. Der Kontakt zu Busleitern kann durch Kontaktstifte 3 erfolgen. Das Kontaktsystem 1 steht mit einem Busankoppler 4 und mit einer Steuerelektronik 5 in Verbindung. Die Informationsübertragung zur Steuerelektronik 5 erfolgt über den Busankoppler 4, indessen die Energie für eine Bordnetzversorgung direkt vom Kontaktsystem 1 der Steuerelektronik 5 zugeführt werden kann. Busankoppler 4 und Steuerelektronik 5 stehen wechselweise in direkter Verbindung. Die Steuerelektronik 5 kann ein Auslösesystem 6 beaufschlagen. Das Auslösesystem arbeitet mit einem Auslösemagneten 11, insbesondere als Arbeitsstromauslöser ausgeführt, das in Wirkverbindung mit einer Auslöseachse 7 steht. Die Gesamtheit der Funktionsteile bildet den Koppeladapter 13, der verständlicherweise in verschiedenartigsten Gehäusen untergebracht werden kann. Die Auslöseachse 7 erstreckt sich bis zur Außenseite des Busankopplergehäuses, sie kann einen anzubauenden Leitungsschutzschalter im Durchgriff zu seinem Auslösesystem ankoppeln.

Der Busankoppler 4 ist in Verbindung mit der Steuerelektronik 5 außer zur Erfassung und Abgabe von Befehlen auch zur Erfassung von Meßsignalen, bzw. Zustandsinformationen, ausgelegt. Der Koppeladapter kann aufgrund derartiger Meßsignale Ausschaltbefehle insbesondere anhand von vorgegebenen Programmen bilden. Man erzielt dadurch eine intelligente Verarbeitung von Informationen, insbesondere im Zusammenspiel mit der Übertragung durch einen Bus. Dadurch können handelsübliche Schutzschalter mit überprüften, approbierten Schutzwirkungen mit weiteren Schutzwirkungen unterlegt werden. Der Schutzschalter kann somit bei bestimmten Gegebenheiten bereits früher auslösen als der Schutzschalter aufgrund seiner konstruktiven Vorgaben auslösen könnte.

Im Ausführungsbeispiel nach FIG 2 weist die Steuerelektronik 5 einen zusätzlichen, gesonderten Anschluß 18 für einen externen Sensor auf.

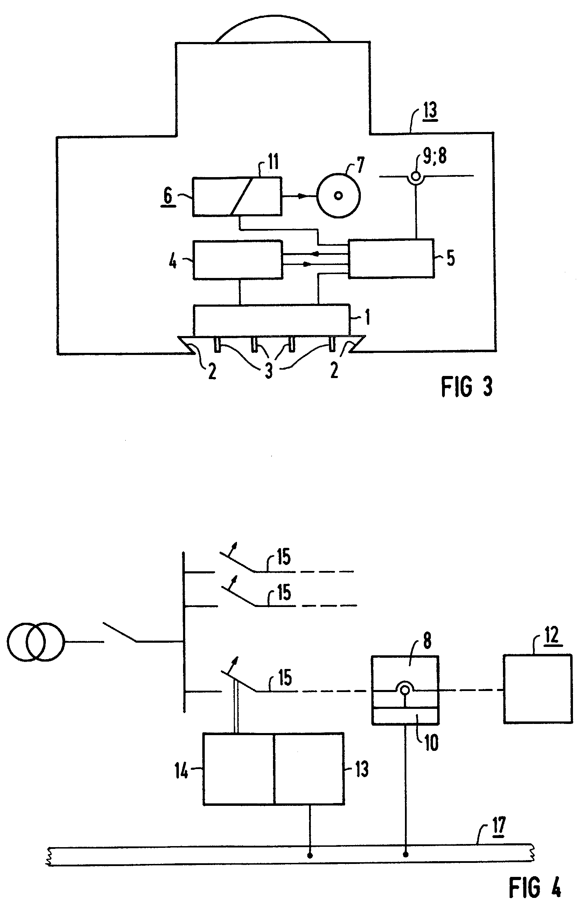

Der Koppeladapter nach FIG 3 weist einen Sensor 8 innerhalb des Gehäuses des Koppeladapters 13 auf, wobei der Sensor 8 mit der Steuerelektronik 5 verbunden ist. Dadurch kann der Koppeladapter selbst Meßsignale beziehungsweise Zustandsinformationen für die Steuerelektronik bereitstellen.

Vorteilhafterweise ist der Koppeladapter mit einer Einrichtung zum Laden eines Programms versehen. In der Praxis kann es günstig sein, ein Programm der Steuerelektronik 5 fest zu installieren und Schnittstellen zur Eingabe von Parametern auszubilden.

Ein Sensor 8 oder allgemein ein Geber von Zustandssignalen kann gesondert in einem Gehäuse untergebracht sein und seine Meßsignale entweder über Bus oder in einer direkten Leitung der Steuerelektronik 5 zuführen. Der Sensor kann auch mit einem Gerät 12, nach FIG 4, zusammengebaut sein, das als Teilnehmerstation der Gebäudesystemtechnik oder auch als zu schützendes Gerät verstanden werden kann. Im Ausführungsbeispiel nach FIG 4 ist ein Sensor 8 über eine Ankoppeleinrichtung 10 am Bus angeschlossen, wobei sich diese aus einem Kontaktsystem 1 und aus einem Busankoppler 4 zusammensetzt. In FIG 4 ist ein System von Zweigleitungen 15 durch Schutzschalter, beispielsweise den Schutzschalter 14, geschützt. Am Schutzschalter 14 ist ein Koppeladapter 13 angeordnet und auf einer Tragschiene gehalten. Der Koppeladapter 13 erhält seine Informationen über Busleiter 17. In FIG 5 ist die Anreihung eines Schutzschalters 14 und eines Koppeladapter 13 auf einer Tragschiene 16 mit eingelegten Busleitern 17 wiedergegeben, wobei beispielsweise zwei Leiter 17 für die Informationsübertragung und zwei Leiter für Energieversorgung der Bordnetze dienen können. Die Bordnetzversorgung kann auch über die Leiter für Informationsübertragung durchgeführt werden, wenn bestimmte, an sich bekannte Vorkehrungen getroffen werden.

In FIG 6 sind verschiedene Anwendungsfälle gemeinsam dargestellt:

Koppeladapter 13, 131 und 132 sind jeweils mit Schutzschaltern 14, insbesondere als Leitungsschutzschalter vorzustellen, aneinandergereiht. Die Zuordnung kann durch mechanische Verbindungselemente sichergestellt sein. Busverteiler 19 verbinden jeweils die Busleiter 17 der drei Tragschienen 16 untereinander. Der Koppeladapter 131 weist einen gesonderten Anschluß für einen externen Sensor auf. Der Koppeladapter 132 ist mit einem integriertem Sensor versehen. Der Sensor ist im Ausführungsbeispiel in die Stromführung zum Schutzschalter 14 einbezogen. Dadurch kann der Strom zum Schutzschalter 14 gemessen und ausgewertet werden. Dem Schutzprofil entsprechend können Ausschaltsignale im Koppeladapter 132 gebildet werden und die Auslösung des Schutzschalters 14 eingeleitet werden, auch wenn der Schutzschalter 14 von sich aus noch nicht ansprechen würde.

Die Bedeutung des Koppeladapters läßt sich anhand der Figuren 4 und 6 erläutern:

In einer elektrischen Energieverteilungsstation werden Abzweigleitungen 15 in üblicher Weise jeweils durch Leitungsschutzschalter 14 geschützt, die in ihrem Abschaltverhalten auf den Querschnitt der jeweiligen Zweigleitung abgestimmt sind. Dieser Schutz muß sich mit den Anforderungen angeschlossener Geräte, beispielsweise eines Gerätes 12, nicht decken. Vielmehr kann ein Gerät 12 sensibler sein und ein anderes Schutzprofil erfordern.

Wenn beispielsweise ein angeschlossenes Gerät bei einem Nennstrom von 5 A einen Strom von 10 A maximal drei Minuten verträgt, dann ist dieses Gerät durch einen Leitungsschutzschalter, dessen Schutzprofil in üblicher Weise auf eine Leitung von 1,5 mm² abgestimmt ist, nicht ausreichend zu schützen. Der Koppeladapter stellt in derartigen Fällen eine intelligente Zusatzfunktion zur Verfügung, indem das Schutzprofil, beziehungsweise das Schutzprogramm, in einer frei anbaubaren Zusatzkomponente einen Ausschaltbefehl generiert. Im erwähnten Beispiel ist das bei einem Strom von 10 A nach drei Minuten der Fall.

Der Koppeladapter 13 kann durch ein geeignetes Programm dafür eingerichtet sein, einen Antrieb, einen Motor oder einen Magneten zu schützen, indem bei bestimmten geeigneten Meßwerten ein Befehl erzeugt wird und beispielsweise mittels eines Schutzschalters eine Abschaltung auf eine der beschriebenen Weisen erfolgt. Verständlicherweise kann auch ein Schutzschalter und ein Koppeladapter zu einem einzigen Kompaktgerät zusammengebaut sein.

Da sich der Koppeladapter 13 auf verschiedene Arten auch nachträglich einsetzen läßt, können die durch ihn bereitgestellten Zusatzfunktionen dort eingesetzt werden, wo sie benötigt werden. Andere Leitungszweige und Geräte können auf herkömmliche Weise betrieben werden. Durch Koppeladapter in der Funktion ergänzte Geräte und marktübliche Geräte könne im Mischbetrieb nebeneinander eingesetzt werden.

## Patentansprüche

1. Koppeladapter (13) zum Anschließen eines Schutzschalters (14), insbesondere eines Leitungsschutzschalters, an einem Information führenden Bus, insbesondere an einem Bus der European Installation Bus Association, EIBA, wobei ein Busankoppler (4) einerseits mit einem Kontaktsystem zum elektrischen und gegebenenfalls mechanischen Anschließen am Bus in Verbindung steht und andererseits mit einer Steuerelektronik (5), an der ein Auslösesystem (6), insbesondere ein Arbeitsstrom, angeschlossen ist, das auf eine Auslöseachse (7) für anbaubare Schutzschalter (14) arbeitet,
**dadurch gekennzeichnet,** daß
der Busankoppler (4) in Verbindung mit der Steuerelektronik (5) außer zur Erfassung von Befehlen auch zur Erfassung und programmierten Verarbeitung von Meßsignalen, beziehungsweise Zustandsinformationen ausgelegt ist.

2. Koppeladapter nach Anspruch 1,
**dadurch gekennzeichnet,** daß
die Steuerelektronik (5) zusätzlich einen gesonderten Anschluß (18) für einen externen Sensor (8) aufweist.

3. Koppeladapter nach Anspruch 1,
**dadurch gekennzeichnet,** daß
an der Steuerlektronik (5) ein Sensor (8), beziehungsweise Meßglieder innerhalb des Gehäuses des Koppeladapters angeschlossen ist beziehungsweise sind.

4. Koppeladapter nach einem der Ansprüche 1 bis 3,
**dadurch gekennzeichnet,** daß
die Steuerelektronik (5) zur Weiterverarbeitung von Meßsignalen, beziehungsweise Zustandsinformationen, Einrichtungen zum Laden eines geeigneten Programms zur Verarbeitung aufweist, insbesondere geeignet zur Abgabe von Ausschaltbefehlen über Bus.

5. Koppeladapter nach Anspruch 4,
**gekennzeichnet durch** eine Einrichtung zum Laden eines Programms zur Verarbeitung - über Bus.

6. Koppeladapter nach Anspruch 5,
**dadurch gekennzeichnet,** daß
das Programm fest gespeichert ist und Schnittstellen zur Eingabe von Parametern aufweist.

## Claims

1. Coupling adaptor (13) for connecting a circuit-breaker (14), in particular a line circuit-breaker, to an information-carrying bus, in particular to a bus of the European Bus Association, EIBA, wherein a bus coupler (4) is connected on the one hand to a contact system for electrical and possibly mechanical connection to the bus and on the other hand to a control electronics element (5) to which there is connected a tripping system (6), in particular a working current, which operates with a tripping spindle (7) for build-on circuit-breakers (14), characterised in that the bus coupler (4) is designed so that it is connected to the control electronics element (5) for the detection of commands and in addition for the detection and programmed processing of respective measuring signals and state information.

2. Coupling adaptor according to claim 1, characterised in that the control electronics element (5) has additionally a separate terminal (18) for an external sensor (8).

3. Coupling adaptor according to claim 1, characterised in that, within the housing of the coupling adaptor, a sensor (8) or measuring elements is or are attached to the control electronics element (5).

4. Coupling adaptor according to one of claims 1 to 3, characterised in that the control electronics element (5) for the further processing of respective measuring signals and state information, has devices for loading an appropriate program for processing, appropriate in particular for the delivery of turn-off commands by way of a bus.

5. Coupling adaptor according to claim 4, characterised by a device for loading a program for processing - by way of a bus.

6. Coupling adaptor according to claim 5, characterised in that the program is permanently stored and has interfaces for the entering of parameters.

## Revendications

1. Adaptateur (13) de couplage pour le raccordement d'un disjoncteur (14), notamment d'un disjoncteur de protection de ligne, à un bus transportant de l'information, notamment à un bus de la European Installation Bus Association, EIBA, un coupleur (4) de bus étant en liaison d'une part avec un système de contact pour le raccordement électrique et éventuellement mécanique au bus et étant connecté d'autre part à un dispositif électronique (5) de commande, auquel est connecté un système (6) de déclenchement, notamment un courant de travail, qui travaille sur un axe (7) de déclenchement pour des disjoncteurs (14) pouvant être adjoints,
caractérisé en ce que
le coupleur (4) de bus est conçu, en liaison avec le dispositif électronique (5) de commande, outre pour la détection d'instructions, également pour la détection et le traitement programmé de signaux de mesure, respectivement d'informations d'état.

2. Adaptateur de couplage suivant la revendication 1,
caractérisé en ce que
le dispositif électronique (5) de commande comporte en plus un raccordement distinct (18) pour un capteur externe (8).

3. Adaptateur de couplage suivant la revendication 1,
caractérisé en ce que
il est connecté au dispositif électronique (5) de commande un capteur (8), respectivement des organes de mesure, à l'intérieur du boîtier de l'adaptateur de couplage.

4. Adaptateur de couplage suivant l'une des revendications 1 à 3,
caractérisé en ce que
le dispositif électronique (5) de commande pour le retraitement de signaux de mesure, respectivement d'informations d'état comporte des dispositifs de chargement d'un programme approprié de traitement, et est notamment approprié pour fournir des informations de débranchement par bus.

5. Adaptateur de couplage suivant la revendication 4,
caractérisé par un dispositif de chargement d'un programme de traitement par bus.

6. Adaptateur de couplage suivant la revendication 5,
caractérisé en ce que
le programme est mémorisé de manière fixe et comporte des interfaces pour l'introduction de paramètres.
